# EUROPEAN PATENT APPLICATION

(11) **EP 2 996 330 A1**
(43) Date of publication of application: **16.03.2016**
(21) Application number: 15184960.1
(22) Date of filing: 11.09.2015
(51) Int. Cl.: H04N 7/088

(54) **VIDEO PLAYER AND VIDEO SYSTEM**

(30) Priority: 12.09.2014 JP 2014186403
(71) Applicant: Teac Corporation, Tama-shi, Tokyo 206-8530 (JP)
(72) Inventor: Kato, Masato, Saitama-ken (JP); Kaku, Daisuke, Tokyo (JP); Hosonuma, Shinichi, Saitama-ken (JP); Nakano, Atsuki, Tokyo (JP)
(74) Representative: Lang, Christian

(57) **Abstract**

There are provided a video player for outputting a video signal which enables a monitor to easily, reliably detect that a signal is in a letterbox format and a video system having the video player. When the aspect ratio of video data is 16: 9, the video player (1) converts the video data into an NTSC signal (100) in a letterbox format, outputting the thus-converted NTSC signal. In addition, the video player adds a closed caption signal to specific lines in a vertical blanking period, and each piece of 2-byte data is set to space. A 16: 9 aspect ratio monitor (40) receives an NTSC signal distributed by a distributor; detects that the closed caption signal is added to the NTSC signal and that data about the closed caption signal is space; and displays a main video in an zooming-in manner. A 4:3 aspect ratio monitor (42) displays the main video as is.

## Description

### PRIORITY INFORMATION

This application claims priority to Japanese Patent Application No. 2014-186403 filed on September 12, 2014, which is incorporated herein by reference in its entirety.

### BACKGROUND OF THE INVENTION

### Technical Field

The present invention relates to a video player and a video system and, more particularly, to a video player and a video system suitable for being mounted in an aircraft.

### Related Art

An aircraft provides a movie or an audio program in order to offer more comfortable travel (so-called inflight entertainment) to passengers. A video player for use in an aircraft is required to have performance unique to an aircraft, such as sturdiness, compactness, lightweight, low power consumption, and temperature resistance.

Digitization of inflight entertainment has recently proceeded. However, there are cases where, in a considerable number of aircrafts, a video player plays back and outputs an analog video signal, supplies the analog video signal to monitors set at respective positions in a cabin of the aircraft, and outputs videos and sounds. Further, at present, many monitors in aircrafts mixedly include 4:3 aspect ratio monitors as well as 16:9 aspect ratio monitors.

Meanwhile, in order to effectively utilize a 16:9 aspect ratio wide screen, a video signal in a letterbox format has been known. The letterbox format is for preventing image information from being cropped when displayed in a zooming-in manner on the wide screen by creating, from a 4:3 aspect ratio transmission, a main video with a picture in its center in 16:9 aspect ratio and generating black-belt-like blanks up and below the main video. When the video signal has a letterbox format, a monitor compatible with the letterbox format is equipped with a letterbox detector for automatically detecting the format and displaying a video in a zooming-in manner on a wide screen.

JP H07-264554 A, JPH09-163263A, and JP H10-233976 A describe techniques of detecting a letterbox (black belts) above and below a 16: 9 aspect ratio wide television video by means of a brightness signal and displaying a main video so as to push the letterbox outside a display field when detecting the letterbox.

JP 3576383 B describes a technique of displaying a main video in a zooming-in manner so as to hide the letterbox and also hindering the letterbox detector from being enabled in a period of horizontal lines which may include the closed caption information when there is closed caption (subtitle) information, so as not to subject the video signal to zooming-in processing.

In the related art, the letterbox of the video signal is detected by monitoring the brightness signal. However, a problem is that the letterbox cannot be distinguished from a black level signal of the main video simply by means of only the brightness signal.

In order to distinguish the letterbox from the black level signal of the main video, it is also possible to improve the accuracy of detection of the letterbox by monitoring continuity of the black level. However, when continuity is not necessarily guaranteed for reasons of mixing of noises in the letterbox, the noises will raise a problem. In particular, when consideration is given to mounting a video player in an aircraft, since a video signal is supplied from the video player set at a specific location in the aircraft to monitors set at a plurality of positions in the cabin of the aircraft, the video signal has a nature of being vulnerable to mixing of noises (for instance, a case where the video player is set forward of a cabin of the aircraft and where a video signal is supplied to monitors set backward of the cabin in the aircraft). A technique of enabling easier and reliable detection of the letterbox.

### SUMMARY

The present invention provides a video player which outputs a video signal which enables a monitor to easily, reliably detect a signal in a letterbox format, as well as providing a video system equipped with the video player.

A video player of the present invention has a detection section for detecting that an aspect ratio of video data is 16:9 and a control section configured so as to add a closed caption signal to specific lines in a vertical blanking period and set specific dummy data when the video data are output as an NTSC signal in a letterbox format.

In one embodiment of the present invention, the specific dummy data are space.

A video system of the present invention has a video player and a monitor for receiving an NTSC signal in a letterbox format transmitted from the video player and providing a display, wherein the video player includes a detection section for detecting that an aspect ratio of video data is 16:9, and a control section configured so as to add a closed caption signal to specific lines in a vertical blanking period and set specific dummy data when the video data are output as the NTSC signal in the letterbox format; and wherein the monitor is configured so as to display, in a zooming-in manner, a main video from the NTSC signal in the letterbox format when the closed caption signal is added to the specific lines of the received NTSC signal and when specific dummy data are set.

In one embodiment of the present invention, the specific dummy data are space.

According to the present invention, the monitor can easily, reliably detect that a signal is in a letterbox format. A monitor compatible with a 16:9 aspect ratio can display a main video from a signal in a letterbox format in a zooming-in manner. Even in the case of a monitor which is not compatible with the function of displaying the main video in a zooming-in manner in accordance with the closed caption signal, unwanted character data are not unintentionally displayed because dummy data are set as data about the closed caption signal.

The invention will be more clearly comprehended by reference to the embodiments provided below. However, the embodiments provided below are illustrative, and the scope of the invention is not limited to the embodiments.

### BRIEF DESCRIPTION OF THE DRAWINGS

A preferred embodiment of the present invention will be described in detail by reference to the following drawings, wherein :
FIG. 1 is a configuration block diagram of an embodiment;
FIG. 2 is a functional block diagram of a video/audio encoder of the embodiment;
FIG. 3 is a system block diagram of the embodiment;
FIG. 4 is a descriptive view of a closed caption signal of the embodiment; and
FIG. 5 is a processing flowchart of the system of the embodiment.

### DETAILED DESCRIPTION

By reference to the drawings, an embodiment of the present invention is hereunder described by taking as an example a video player for use in an aircraft. The embodiment provided below is illustrative, and the present invention is not limited to the following embodiment. The present invention is particularly suitable for mounting the video player in the aircraft. Needless to say, however, the present invention is applicable to uses other than the aircraft.

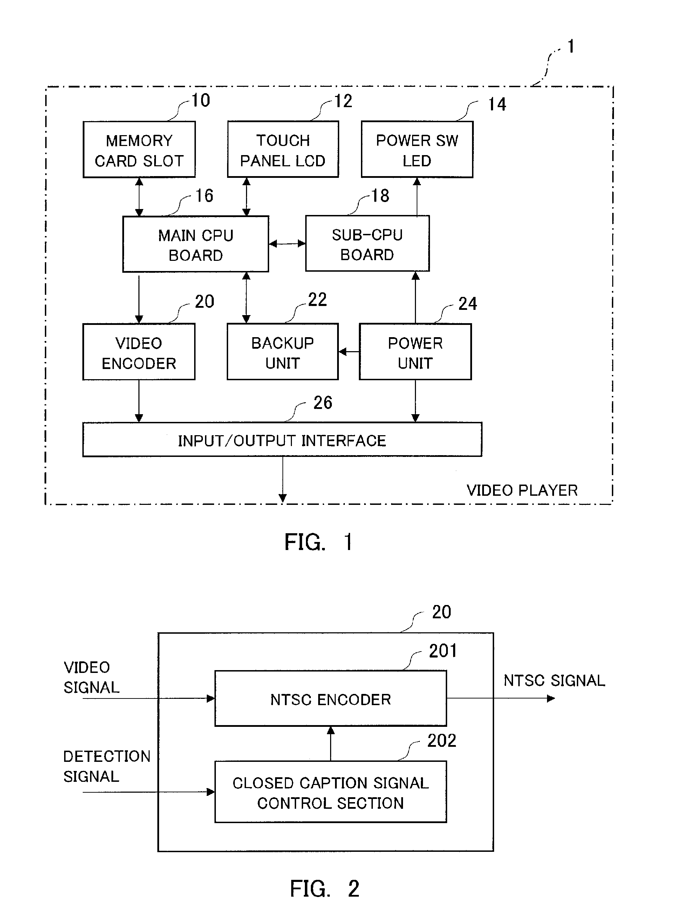

FIG. 1 is a configuration block diagram of a video player 1 of the embodiment. The video player 1 has a memory card slot 10, a touch panel LCD 12, a power SWLED 14, a main CPU board 16, a sub-CPU board 18, a video encoder 20, a backup unit 22, a power unit 24, and an input/output interface 26.

The memory card slot 10 is a slot which enables attachment of flash memory, such as an SD memory card. The memory card slot 10 is connected with a main CPU board 16 and accessible from a main CPU.

The touch panel LCD 12 is set on a front surface of the video player 1 and displays various buttons and a playback state, a pause state, and a stop state of videos/sounds. The touch panel LCD 12 is connected to the main CPU board 16, and the main CPU controls the display of the touch panel LCD 12.

The power SW (switch) LED 14 indicates a state of activation/deactivation of power and various statuses of the video player 1 by means of a state of illumination (active/inactive/blinking/color change/etc.) of an LED.

The main CPU board 16 is a circuit board equipped with the main CPU and memory. The main CPU implements various functions by executing processing programs stored in program memory. Specifically, the main CPU makes an access to an SD memory card, and others, inserted in the memory card slot 10; reads video data stored in the SD memory card; and decodes and outputs the data to the video encoder 20. For instance, the main CPU reads and decodes MPEG-2 or MPEG-4 compressed video data in SD-Video format, which are stored in the SD memory card, and decodes the thus-read video data. In addition, the main CPU detects whether or not the video data read from the SD memory card are 16: 9 aspect ratio video data, and outputs a detection signal to the video encoder 20. When the read video data conform to; for instance, MPEG-4, MPEG-4 includes information about an aspect ratio. Hence, the main CPU can detect that an aspect ratio of the video data is 16:9 by detecting the aspect ratio information. The same also applies to MPEG-2.

A sub-CPU board 18 is a circuit having a sub-CPU and memory and performs predetermined processing in cooperation with the main CPU board 16. For instance, the sub-CPU board 18 controls activation/deactivation of the power-SWLED 14 and monitors a state of the main CPU. Upon detection of an anomaly in the main CPU, the sub-CPU board 18 provides a substitute for, among functions of the main CPU board 16, the minimum function required for operation of the video player 1. The minimum required function is, for instance, a function of displaying a message of occurrence of a system error on the touch panel LCD 12, accepting a user input to stop the video player 1, and deactivating or shutting down the video player 1.

The video encoder 20 receives an input of video data supplied from the main CPU board 16, encodes the video data into an analog NTSC signal, and outputs the NTSC signal. For instance, the video encoder 20 encodes MPEG-4 video data into an NTSC signal. On this occasion, when receiving the detection signal from the main CPU board 16, the video encoder 20 encodes the video data into a 4:3 aspect ratio NTSC signal in a letterbox format by adding black belts to the top and bottom of a 16:9 aspect ratio main video; adds a closed caption signal to the NTSC signal; and sets specific dummy data as data about the closed caption signal.

A backup unit 22 is a backup unit for a power source including a plurality of large-capacitance capacitors. Detecting stoppage of a power supply to the power source unit 24, the backup unit 22 issues a shutdown instruction to the main CPU, and supplies electric power until completion of shutdown operation.

The power unit 24 supplies electric power to respective sections of the video player 1. In the drawings, the power unit 24 supplies electric power to the sub-CPU board 18, the backup unit 22, and the input/output interface 26. However, the power supply of the power unit 24 is not limited to them.

The input/output interface 26 outputs the NTSC signal output from the video encoder 20 to the monitors set at a plurality of locations in the aircraft by way of a distributor 30 to be described later.

FIG. 2 is a functional block diagram of the video encoder 20. The video encoder 20 is equipped with an NTSC encoder section 201 and a closed caption signal control section 202.

The NTSC encoder section 201 converts the video data supplied from the main CPU board 16 into an NTSC signal, outputting the NTSC signal. When the aspect ratio of the video data is 16:9, black belt blanks are created above and below the main video, whereby the video data are converted into a 4:3 aspect ratio NTSC signal in a letterbox format. When the aspect ratio of the video data is 4:3, the video data are converted into an NTSC signal while maintaining the aspect ratio at-is (without converting the aspect ratio into the letterbox format) and output.

When the main CPU board 16 supplies a detection signal, i.e., a detection signal indicating that the video signal has a 16: 9 aspect ratio, the closed caption signal control section 202 makes settings so as to add a closed caption signal to predetermined lines of the NTSC signal, and also controls the NTSC encoder section 201 so as to add dummy data as text information.

A vertical blanking period is set at a head of the analog video signal, such as an NTSC signal, as a period necessary for an electron beam having drawn an image on a screen from top to bottom to return to the top again in order to draw a subsequent image on the screen. In the case of the NTSC signal, scanning lines from the first scanning line (1H, 263H) to the 21^{st} scanning line (21H, 284H) correspond to the vertical blanking period. Since a signal entered this period is not particularly drawn, a control signal, a test signal, text data, and the like, are inserted into the period. Specifically, there are stipulated
1^{st} to 9^{th} scanning lines: a vertical sync signal,
10^{th} to 21^{st} scanning lines: a test signal and another signal,
10^{th} to 13^{th} scanning lines : a data multiplex broadcast field,
14^{th} to 16^{th} scanning lines : a text multiplex broadcast field,
18^{th} scanning line: a GCR signal for clear vision,
20^{th} scanning line: a copy control signal CGMS-A, and
21^{st} scanning line: a closed caption (closed captioning) signal (caption information). The closed caption signal can be enabled (displayed) or disabled (hidden).

When receiving an input of the detection signal from the main CPU, the closed caption signal control section 202 makes settings so as to add a closed caption signal to the 21^{st} scanning lines, i.e., 21H (line 21) and 284H (line 284). A space is set as dummy data to a 2-byte ASCII code. The closed caption signal control section 202 does not receive an input of the detection signal from the main CPU. In other words, when the aspect ratio of the video data is not 16:9, the closed caption signal is not added.

As above, a determination as to whether or not the video data has a 16:9 aspect ratio; in other words, whether or not the video data are in the letterbox format, is transmitted by utilization of the closed caption signal (caption information) specified by the specific lines of the vertical blanking period. Thereby, the monitor received the NTSC signal can readily identify that the video data are a video signal having the letterbox format, as long as the monitor detects a 21H signal and a 284H signal.

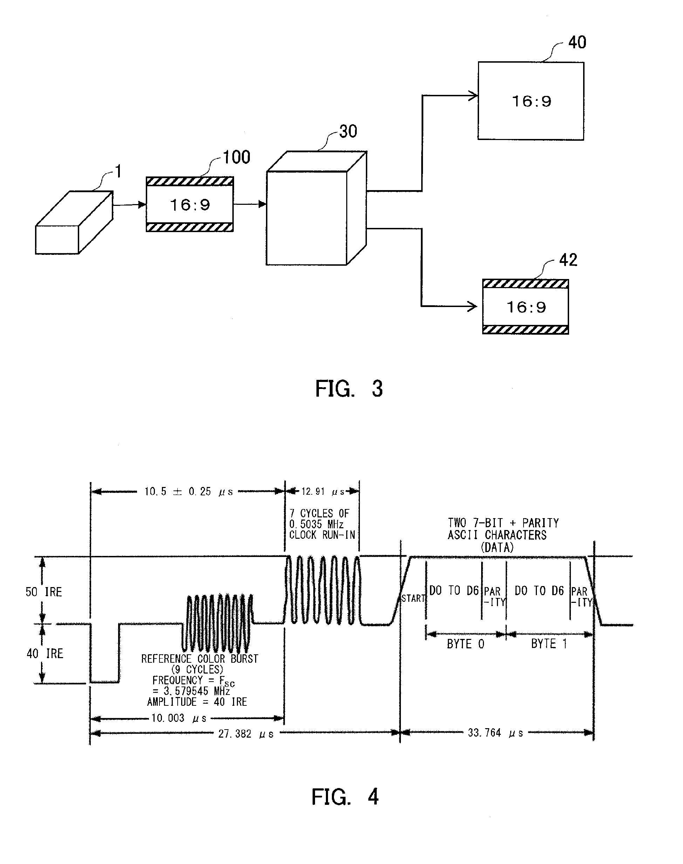

FIG. 3 is a block diagram of the inflight entertainment system using the video player 1 of the embodiment.

The system is made up of the video player 1, the distributor 30, a plurality of monitors 40, 42, ...

The video player 1 converts the 16:9 aspect ratio video data into an NTSC signal 100 in a letterbox format, outputting the NTSC signal.

The distributor 30 distributes the NTSC signal 100, thereby distributing the NTSC signal to the monitors 40 and 42 placed at a plurality of locations in the aircraft.

The monitor 40 is a 16:9 aspect ratio monitor and detects the 21H signal and the 284H signal belonging to the vertical blanking period of the NTSC signal; detects whether or not caption information is added to these signals; and whether or not 2-byte data are set on dummy data (space). Since a space (null) in ASCII codes is 0x20 (hexadecimal digits), it is detected that each of 2-byte data is 0x20. When it is detected that the caption information is added and that each piece of the 2-byte data is set to space, the received NTSC signal is determined to be in a letterbox format, and a main video is displayed in a zooming-in manner such that the letterbox is pushed outside the display field. In contrast, when the caption information is not added or when none of the 2-byte data are space even when the caption information is added, the video signal is displayed as is. Accordingly, when there is caption information from the beginning, the monitor 40 can display the caption information without modifying it.

The monitor 40 of the embodiment is equipped with an ordinary video demodulation circuit, a closed caption signal detection circuit (a closed caption decoder), and a zooming circuit. The video demodulation circuit demodulates a brightness signal component (Y) and two color signal components (I, Q) from the NTSC signal. The closed caption signal detection circuit detects the 21H signal and the 284H signal in the vertical blanking period; detects whether or not the caption information is added to the signals; and detects whether or not all of the 2-byte data are set to dummy data (space). When the closed caption signal detection circuit has added the caption information and when each piece of the 2-byte data is space, the zooming circuit displays a main video in a zooming-in manner. The main video is extracted by detecting; for instance, a brightness level in the vertical direction and distinguishing a picture area and a blank area. As a matter of course, a technique of zooming in the main video is widely known, and an arbitrary known method can be used. The monitor 40 of the present embodiment detects whether or not the NTSC signal is in the letterbox format by use of the closed caption signal. Hence, compared with a case where a detection is performed as to whether or not the NTSC signal is in the letterbox format by simply monitoring a change in brightness level in the vertical direction, detection can be performed more easily and reliably.

A closed caption decoder itself is widely known in connection with the monitor 40. The monitor 40 of the embodiment can be said to be characterized in that it detects a closed caption signal by use of a known closed caption decoder and activates the zooming circuit by taking as a trigger specific dummy data (space) when there is caption information and when data about the information are specific dummy data (space).

In the meantime, the monitor 42 is a 4 :3 aspect ratio monitor, and displays caption information in accordance with the original function when detecting the 21H and the 284H signals in the vertical blanking period of the NTSC signal and that the caption information is added to these signals. However, since dummy data, i.e., space, are set as caption information in the embodiment, the caption information does not appear on the monitor 42. When there is caption information from the beginning, the monitor 42 displays the caption information as is in the same manner as does the monitor 40. When the caption information is not added, the video signal is output as is.

FIG. 4 shows a specific example of the closed caption signal. The closed caption signal includes a reference color burst signal and a clock signal followed by a start signal and a 2-byte data signal made up of seven bits + a parity bit. D0 to D6 of each byte are set to 0x20 (space), whereby space can be set as dummy data. The 16:9 aspect ratio monitor 40 displays the main video in a zooming-in manner by detecting such a closed caption signal. Since the 4:3 aspect ratio monitor 42 displays a caption of space by detecting the closed caption signal, the caption is eventually undisplayed in any cases.

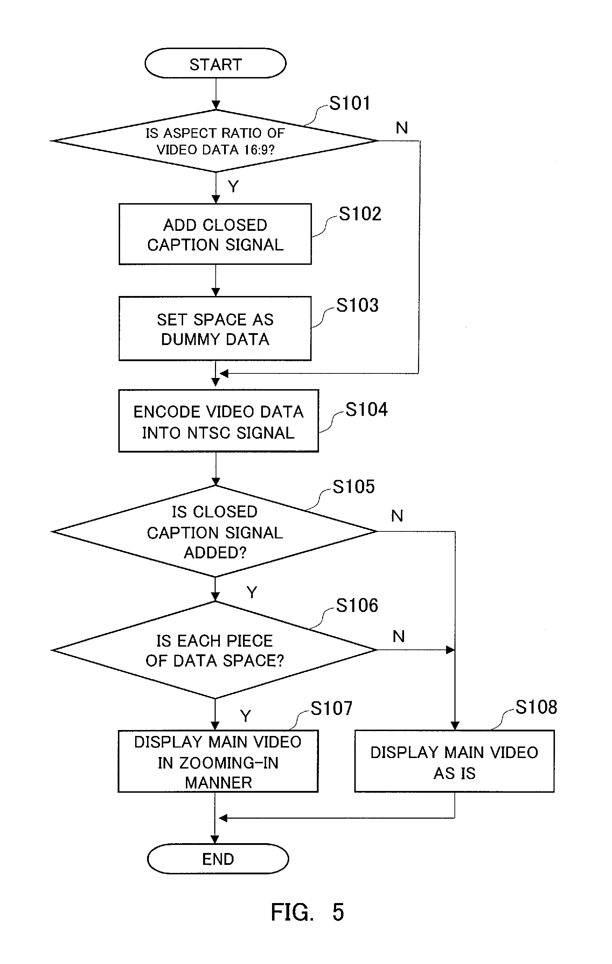

FIG. 5 is a processing flowchart of a video system of the embodiment. In FIG. 5, processing pertaining to S101 to S105 is processing to be performed by the video player 1, and processing pertaining to S105 to S108 is processing to be performed by the monitor 40.

The video player 44 first sends video data to the monitor 40, and detects whether or not an aspect ratio of video data to be displayed on the monitor 40 is 16:9 (S101). When the aspect ratio is 16: 9, the closed caption signal is subsequently added (S102), and dummy data corresponding to space are set as data pertaining to the closed caption signal (S103). Specifically, each of the 7-bit ASCII code is set to 0x20 (space). The video data are encoded into an NTSC signal with a letterbox format (S104). In the meantime, when the aspect ratio is not 16:9 (where an aspect ratio is 4:3), the video data are encoded into anNTSC signal not having the letterbox format (S104). The video player 1 transmits the NTSC signal to the monitor 40 via the distributor 30.

Receiving the NTSC signal, the monitor 40 detects whether or not the closed caption signals are already added to the 21H line and the 284H line in the vertical blanking period (S105). When the closed caption signals are already added, it is detected whether or not each piece of the 2-byte data is set to space (S106). When the closed caption signal is added and when each piece of the data is space, the monitor 40 displays the main video in a zooming-in manner on the premise that the received NTSC signal is in letterbox format (S107). Accordingly, the original 16:9 aspect ratio video is displayed as is in a 16:9 ratio. In the meantime, when NO is selected in either S105 or S106; namely, when the closed caption signal is not added or when none of the data is space, the main video is displayed as is without being zoomed in (S108). Accordingly, where the NTSC signal is not in the letterbox format or where significant data (caption information) are added when the data is in the letterbox format, the main video is displayed as is. Particularly, in the latter case, when there is significant caption information, the main video is displayed as is, so that original caption information is not impaired.

In the present embodiment, the monitor 40 is based on the premise that the monitor 40 has a function of displaying the main video in a zooming-in manner when the closed caption signal is added and when each piece of the 2-byte data is set to the dummy data (space) . However, even if the monitor 40 does not have the function, the dummy data of the closed caption signal are set to space, and hence a specific character will not be erroneously displayed. Namely, only space is simply displayed as a caption, and an unwanted character is not displayed. The embodiment yields an advantage of space being added as dummy data to the closed caption signal.

As above, in the present embodiment, an existing closed caption signal is used as a standard of the NTSC signal, and the fact that the video signal is in the letterbox format is transmitted to the monitor by adding the closed caption signal. Accordingly, even in the environment where there is a relatively long transmission distance as in the case of the interior of the aircraft and where a signal is vulnerable to mixing of various noises, the monitor can correctly display a video.

Although the embodiment of the present invention has been described thus far, the present invention is susceptible to various modifications without being limited to the embodiment.

For instance, in the present embodiment, the space is set as dummy data. However, another thing except for space can be used, as long as the video data are data (including control letters) which do not pose any problem even when displayed as a caption.

In the embodiment, the main CPU of the main CPU board 16 detects whether or not the aspect ratio of the video data is 16: 9. Instead, a signal indicating that the aspect ratio of the video data is 16:9 may also be input from an external device, or the user of the video player 1 may also enter information about a 16:9 aspect ratio by operating the touch panel LCD 12. Even in these cases, the main CPU can detect that the aspect ratio of the video data is 16:9 by use of the input signal. Incidentally, the touch panel LCD 12 may also be provided with a menu button, such as a "Conversion into letterbox format," and the video data can also be encoded into an NTSC signal in a letterbox format and output to the monitor by operating the button. Even in this case, the operation is substantially tantamount to that achieved in the case where the main CPU detects that the aspect ratio of the video data is 16:9 by use of the menu button operation signal and where the video data are encoded into an NTSC signal in a letterbox format.

## Claims

1. A video player comprising:
a detection section for detecting that an aspect ratio of video data is 16:9; and
a control section configured so as to add a closed caption signal to a specific line in a vertical blanking period and set specific dummy data when the video data are output as an NTSC signal in a letterbox format in accordance with a detection signal supplied from the detection section.

2. The video player according to claim 1, wherein the specific dummy data are space.

3. The video player according to claim 1, wherein the control section outputs the video data as an NTSC signal without converting the video data into the letterbox format when the detection signal is not supplied from the detection section.

4. The video player according to claim 1, wherein the specific line in the vertical blanking period is 21^{st} scanning lines.

5. The video player according to claim 1, wherein the video player is a video player for use in an aircraft.

6. A video system comprising:
a video player; and
a monitor for receiving an NTSC signal in a letterbox format transmitted from the video player and providing a display, wherein
the video player includes
a detection section for detecting that an aspect ratio of video data is 16:9; and
a control section configured so as to add a closed caption signal to a specific line in a vertical blanking period and set specific dummy data when the video data are output as the NTSC signal in the letterbox format in accordance with a detection signal supplied from the detection section; and
the monitor is configured so as to display, in a zooming-in manner, a main video from the NTSC signal in the letterbox format when the closed caption signal is added to the specific line of the received NTSC signal and when specific dummy data are set.

7. The video system according to claim 6, wherein the specific dummy data are space.

8. The video system according to claim 6, wherein the control section outputs the video data as the NTSC signal without converting the video data into the letterbox format when the detection signal is not supplied from the detection section.

9. The video system according to claim 6, wherein the specific line in the vertical blanking period is 21^{st} scanning lines.

10. The video system according to claim 6, wherein the video system according to claim 6 is a video system for use in an aircraft.

11. The video system according to claim 6, wherein the monitor is configured so as to display the main video as is without zooming in the same when the closed caption signal is not added to the specific line of the received NTSC signal or when the specific dummy data are not set.
